# EUROPEAN PATENT SPECIFICATION

(11) **EP 3 656 496 B1**
(45) Date of publication and mention of the grant of the patent: **20.08.2025**
(21) Application number: 19203369.4
(22) Date of filing: 15.10.2019
(51) Int. Cl.: B23K 9/12, B23K 9/133, B23K 9/173

(54) **WELDING OR ADDITIVE MANUFACTURING DUAL WIRE DRIVE SYSTEM**
DOPPELDRAHTZUFÜHRSYSTEM ZUM SCHWEISSEN ODER ZUR GENERATIVEN FERTIGUNG
SYSTÈME D'ENTRAÎNEMENT À DOUBLE FIL DE SOUDAGE OU DE FABRICATION ADDITIVE

(30) Priority: 15.10.2018 US 201816159805; 07.03.2019 US 201962815036 P; 31.07.2019 US 201916527328
(43) Date of publication of application: 27.05.2020
(73) Proprietor: Lincoln Global, Inc., Cleveland, OH 44117 (US)
(72) Inventor: Peters, Steven R., Huntsburg, OH Ohio 44046 (US); Mehlman, Alexander C, Strongsville, OH Ohio 44149 (US); Weeks, Matthew A., Walloon Queensland, Queensland 4305 (AU); Petot, Bradford W., South Euclid, OH Ohio 44121 (US); Ash, Elliott R, Bay Village, OH Ohio 44140 (US); Casella, Vincent D., Wickliffe, OH Ohio 44092 (US); Johns, Kent R., Hudson, OH Ohio 44236 (US)
(74) Representative: Hoyng Rokh Monegier B.V.

(56) References cited:
- DD-A1- 129 180
- JP-A- H05 111 769
- JP-A- S5 144 542
- JP-B2- 3 739 870
- SU-A1- 1 763 124
- US-A- 2 866 079
- US-A- 5 981 906
- US-B2- 7 383 973

## Description

The invention relates to a welding or additive manufacturing wire drive system according to the preamble of claim 1 (see for example US 2 866 079 A). Devices, systems, and methods consistent with the invention relate to material deposition with a dual wire configuration.

### Description of Related Art

When welding, it is often desirable to increase the width of the weld bead or increase the length of the weld puddle during welding. There can be many different reasons for this desire, which are well known in the welding industry. For example, it may be desirable to elongate the weld puddle to keep the weld and filler metals molten for a longer period of time so as to reduce porosity. That is, if the weld puddle is molten for a longer period of time there is more time for harmful gases to escape the weld bead before the bead solidifies. Further, it may desirable to increase the width of a weld bead so as to cover a wider weld gap or to increase a wire deposition rate. In both cases, it is common to use an increased electrode diameter. The increased diameter will result in both an elongated and widened weld puddle, even though it may be desired only to increase the width or the length of the weld puddle, but not both. However, this is not without its disadvantages. Specifically, because a larger electrode is employed more energy is needed in the welding arc to facilitate proper welding. This increase in energy causes an increase in heat input into the weld and will result in the use of more energy in the welding operation because of the larger diameter of the electrode used. Further, it may create a weld bead profile or cross-section that is not ideal for certain mechanical applications. Rather than increasing the diameter of the electrode, it may be desirable to use two smaller electrodes simultaneously.

Document DD 129 180 A1 discloses a double wire feeder that ensures the transport of two welding wires to the welding head with the aim to improve the quality of the weld seam by continuously feeding filler material. The task is to ensure a smooth, synchronised and parallel feed of both welding wires to the welding point during single-sided arc joint welding by means of parallel wire welding. The feed roller of the double wire feed unit is provided with a groove on the circumference, the cross-section of which is a circular section.

Document SU 1 763 124 A1 discloses simultaneous feeding into the welding zone two wires, in which the wires are matched with each other and fed into the welding zone by means of two spring-loaded feed rollers, placing each wire in the groove.

### BRIEF SUMMARY OF THE INVENTION

In accordance with one aspect of the present invention, provided is a welding or additive manufacturing wire drive system as defined in claim 1.

The system includes a first spindle for a first welding wire spool, a second spindle for a second welding wire spool, a first drive roll, and a second drive roll, wherein one or both of the first drive roll and the second drive roll has a circumferential groove. A first welding wire, from the first welding wire spool, is located between the first drive roll and the second drive roll in the circumferential groove. A second welding wire, from the second welding wire spool, is located between the first drive roll and the second drive roll in the circumferential groove. The first welding wire contacts the second welding wire between the first drive roll and the second drive roll. The first welding wire further contacts a first sidewall portion of the circumferential groove. he second welding wire further contacts a second sidewall portion of the circumferential groove. Both of the first welding wire and the second welding wire are radially offset from a central portion of the circumferential groove.

Further preferred embodiments are defined in the dependent claims.

### BRIEF DESCRIPTION OF THE DRAWINGS

The foregoing and other aspects of the invention will become apparent to those skilled in the art to which the invention relates upon reading the following description with reference to the accompanying drawings, in which:
FIG. 1 is a schematic diagram of an example welding system;
FIG. 2 is a perspective view of an example welding system;
FIG. 3 is a side view of an example wire feeder;
FIG. 4 is a perspective view of an example wire feeder;
FIG. 5 is a side view of an example wire feeder;
FIG. 6 is a perspective view of an example reel stand;
FIG. 7 illustrates an example drive roll;
FIG. 8 is a perspective view of the example drive roll;
FIG. 9 illustrates a cross section of drives rolls feeding dual wires;
FIG. 10 illustrates a cross section of drives rolls feeding dual wires;
FIG. 11 illustrates a cross section of drives rolls feeding dual wires;
FIG. 12 illustrates a cross section of drives rolls feeding dual wires;
FIG. 13 illustrates a cross section of drives rolls feeding dual wires;
FIG. 14 illustrates a cross section of drives rolls feeding dual wires;
FIG. 15 illustrates a cross section of drives rolls feeding dual wires.

### DETAILED DESCRIPTION OF THE INVENTION

Exemplary embodiments of the invention will now be described below by reference to the attached Figures. The described exemplary embodiments are intended to assist the understanding of the invention, and are not intended to limit the scope of the invention in any way. Like reference numerals refer to like elements throughout.

As used herein, "at least one", "one or more", and "and/or" are openended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together. Any disjunctive word or phrase presenting two or more alternative terms, whether in the description of embodiments, claims, or drawings, should be understood to contemplate the possibilities of including one of the terms, either of the terms, or both terms. For example, the phrase "A or B" should be understood to include the possibilities of "A" or "B" or "A and B."

One inch corresponds to 25.4 millimeters.

Embodiments of the present invention are described herein in the context of a welding system. Example welding systems include gas metal arc welding (GMAW) systems, submerged arc welding (SAW) systems, flux-cored arc welding (FCAW) systems, metal-cored arc welding (MCAW) systems, and the like. Further, while the electrodes described herein can be solid electrodes, embodiments of the present invention are not limited to the use of solid electrodes. For example, flux-cored electrodes and metal-cored electrodes can also be used without departing from the spirit or scope of the present invention. Further, embodiments of the present invention can also be used in manual, semi-automatic and robotic welding operations. Because such systems are well known, they will not be described in detail herein.

Embodiments of the present invention will be discussed in the context of a welding system. However, in addition to welding operations, embodiments can be used in additive manufacturing processes and other welding-type processes involving driven wire electrodes (e.g., hardfacing).

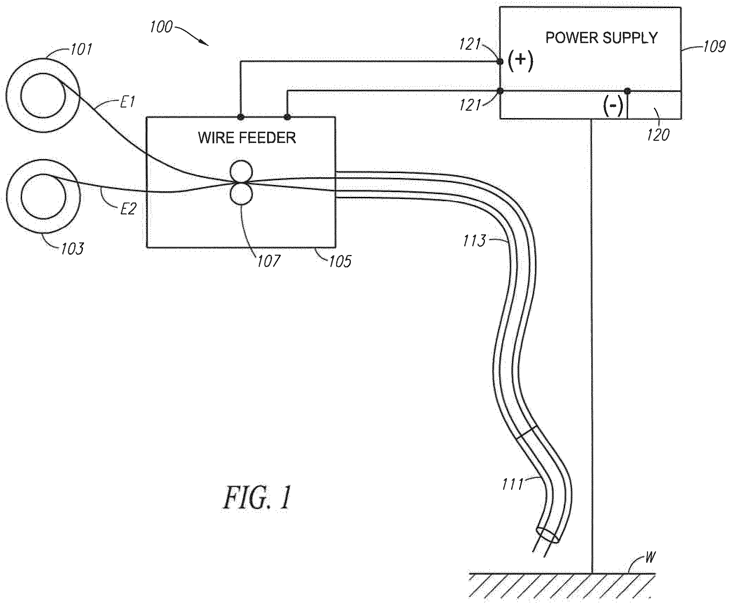

Turning now to the Figures, Figure 1 depicts an exemplary embodiment of a welding system 100. The welding system 100 contains a welding power source or power supply 109 which is coupled to both a welding torch 111 and a wire feeder 105. The power source 109 can be any known type of welding power source capable of delivering welding current and welding waveforms, for example, pulse spray, STT and/or short arc type welding waveforms. Because the construction, design and operation of such power supplies are well known, they need not be described in detail herein. It is also noted that welding power can be supplied by more than one power supply at the same time - again the operation of such systems are known. The power source 109 can also include a controller 120 which is coupled to a user interface to allow a user to input control or welding parameters for the welding operation. The controller 120 can have a processor, CPU, memory etc. to be used to control the operation of the welding process and the generation of welding waveforms. The torch 111, which can be constructed similar to known manual, semi-automatic or robotic welding torches and can be of a straight or gooseneck type. The wire feeder 105 draws wire electrodes E1 and E2 from electrode sources 101 and 103, respectively, which can be of any known type, such as reels, spools, containers or the like. The wire feeder 105 employs drive rolls 107 to draw the electrodes or welding wires E1 and E2 and push or pull the electrodes to the torch 111. Details of the drive rolls 107 are discussed further below. The drive rolls 107 and wire feeder 105 are configured for a dual electrode welding operation. That is, they supply both electrodes E1 and E2 simultaneously to the torch 111 for creating an arc and welding the workpiece W. As shown, the wire feeder 105 is operatively connected to the power source 109 consistent with known configurations of welding operations.

Once driven by the drive rolls 107, the electrodes E1 and E2 can be passed through a liner 113 to deliver the electrodes E1 and E2 to the torch 111. The liner 113 is appropriately sized to allow for the passage of the electrodes E1 and E2 to the torch 111. For example, for two 0.030 inch diameter electrodes, a standard 0.0625 inch inside diameter liner 113 (which is typically used for a single 0.0625 inch diameter electrode) can be used with no modification.

In certain embodiments, the wire electrodes E1, E2 can have different diameters. That is, embodiments of the present invention can use an electrode of a first, larger, diameter and an electrode of a second, smaller, diameter. In such an embodiment, it may be possible to more conveniently weld two workpieces of different thicknesses. For example, the larger electrode can be oriented to the larger workpiece while the smaller electrode can be oriented to the smaller workpiece. Further, embodiments of the present invention can be used for many different types of welding operations including, but not limited to, GMAW, SAW, FCAW, and MCAW. Additionally, embodiments of the present invention can be utilized with different electrode types. For example, it is contemplated that a cored electrode (e.g., flux-cored or metal-cored) can be coupled with a non-cored or solid electrode. Further, electrodes of differing compositions can be used to achieve desired weld properties and composition of the final weld bead. Two different, but compatible, consumables can be combined to create a desired weld joint. For example, compatible consumables such as hardfacing wires, stainless wires, nickel alloys and steel wires of different composition can be combined. As one specific example, a mild steel wire can be combined with an overalloyed wire to make a 309 stainless steel composition. This can be advantageous when a single consumable of the type desired does not have desirable weld properties. For example, some consumables for specialized welding provide the desired weld chemistry but are extremely difficult to use and have difficulty providing a satisfactory weld. However, embodiments of the present invention allow for the use of two consumables that are easier to weld with to be combined to create the desired weld chemistry. Embodiments of the present invention can be used to create an alloy/deposit chemistry that is not otherwise commercially available, or is otherwise very expensive to manufacture. Thus, two different consumables can be used to obviate the need for an expensive or unavailable consumable. Further, embodiments can be used to create a diluted alloy. For example, a first welding wire could be a common, inexpensive alloy and a second welding wire could be a specialty wire. The resulting deposit would be the average of the two wires, mixed well in the formation of a molten droplet, at the lower average cost of the two wires over an expensive specialty wire. Further, in some applications, the desired deposit could be unavailable due to the lack of appropriate consumable chemistry, but could be achieved by mixing two standard alloy wires, mixed within the molten droplet and deposited as a single droplet. Further, in some applications, such as the application of wear resistance metals, the desired deposit may be combination of tungsten carbide particles from one wire and chromium carbide particles from another. Still in another application, a larger wire housing larger particles within is mixed with a smaller wire containing fewer particles or smaller particles, to deposit a mixture of the two wires. Here the expected contribution from each of the wires is proportional to the size of wire. Further, although exemplary embodiments are discussed herein utilizing two wire electrodes simultaneously, other embodiments of the present invention can utilize more than two electrodes. For example, it is contemplated that a three or more electrode configuration can be utilized consistent with the descriptions and discussions set forth herein.

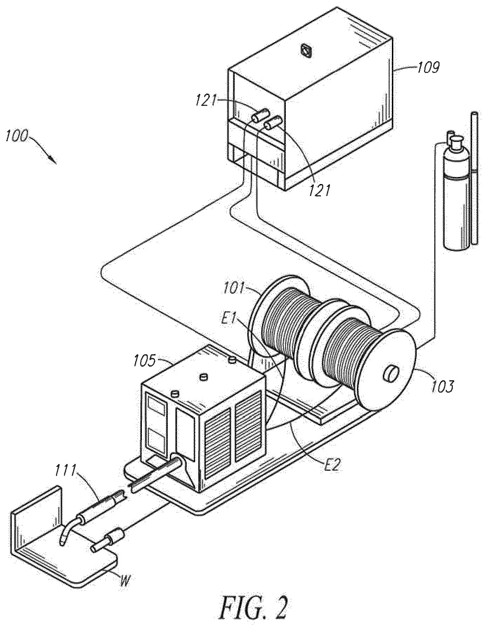

Figure 2 provides a perspective view of the welding system 100. The wire feeder 105 comprises drive rolls for conveying wire electrodes E1, E2 from electrode sources 101, 103, for use in a particular application. The wire electrodes E1, E2, may be drawn continuously from a reel, spool, or container (e.g., a box or a drum), and delivered to the workpiece W, which in the current embodiment is a weldment. The wire feeder 105 may include a drive assembly that utilizes power from one or more locomotive devices, such as an electric motor, that drive the wire electrodes E1, E2 to the application work site or workpiece W.

The welding power source 109 may receive electrical input power from an outside source (e.g., utility power), that is directed to an onboard transformer and processor-controlled inverter or chopper circuitry, not depicted in the figures. Output from the power source 109 may be provided through welding output terminals 121 or studs of the welding power source. A welding gun or torch 111 and wire conduit may be electrically connected to the welding power source 109 through the welding wire feeder 105 for delivering welding current to the workpiece W in a manner known in the art. It follows that the welding wires E1, E2 are fed through the torch 111 and metered out, i.e. dispensed, at the discretion of the application and/or end user in any manner suitable for conducting the welding process. It is noted that the electrodes E1, E2 conduct electricity for establishing a welding arc, wherein the electrodes are conveyed to the workpiece W having a voltage potential equal to or approximately equal to the output voltage of the welding power source 109, which may be substantially greater than ground.

Different modes of conveying the wire electrodes E1, E2 are known in the art, an example of which includes pushing the electrodes to the torch 111 via power or torque provided by the locomotive device. Other modes of conveying the electrodes include push/pull modes that utilize multiple locomotive devices. The electrodes E1, E2 are delivered to the torch 111, which may have a trigger or other activation mechanism for dispensing the electrodes at the user's discretion. At times, it may be necessary to deliver the electrodes E1, E2 at varying rates of feed. Therefore, the locomotive device has an output that is adjustable for varying the wire feed speed (WFS) of the electrodes E1, E2. In particular, a drive motor of the wire feeder 105 may be a variable speed motor to adjust the WFS.

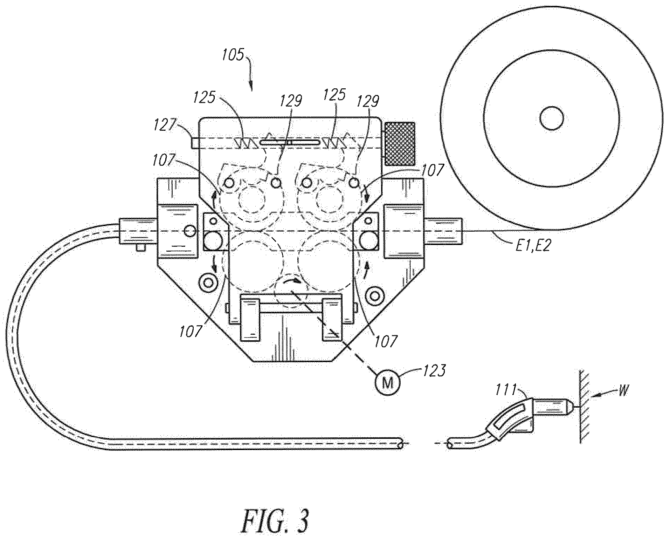

A drive motor 123 is shown in Figure 3. The wire feeder 105 and/or drive motor(s) 123 may draw operating power from the welding power source 109, or an altogether separate power source. Any manner of providing power to operate the welding wire feeder 105 and/or the drive motors 123 may be chosen with sound engineering judgment as is appropriate for use with the embodiments of the present invention.

Referring to Figures 2 and 3, the welding wire feeder 105 may include a drive assembly, or drive roll assembly. As mentioned above, the drive motor 123, also called a wire feeder motor, delivers power, i.e. torque, to convey the first and second welding wires E1, E2 through the wire feeder and to the torch 111 and subsequently to the workpiece W. Drive rolls 107 are included that grip the welding wires E1, E2 for pushing or pulling the welding wires in the appropriate direction, i.e. toward the workpiece W. Sets of drive rolls 107 are vertically aligned and have corresponding aligned annular or circumferential grooves through which the welding wires E1, E2 pass simultaneously. It can be seen that the vertically-aligned sets of drive rolls 107 rotate in opposite directions to drive the welding wires E1, E2 through the wire feeder 105. For example, in Figure 3, the upper drive rolls 107 rotate clockwise and the lower drive rolls rotate counterclockwise. The drive rolls 107 may be cylindrical in configuration, or more specifically disk-shaped, although the particular configuration should not be construed as limiting. The surface, i.e. the outer circumference, of the driver rolls 107 may be comprised of a sufficiently hardened material, like steel, that is durable and suitable for gripping the welding wires E1, E2. As shown, the drive rolls 107 may be disposed in pairs along the wire trajectory with each drive roll of the pair being supported on opposing sides of the welding wires E1, E2, such that respective outer circumferential portions of the rolls engage opposite sides of the wires (e.g., from above and below). It is noted that the central axes of respective drive rolls 107 extend substantially parallel with one another and generally transverse to the trajectory of the welding wires E1, E2.

The wire feeder 105 can include a biasing member that biases the vertically-aligned sets of drive rolls 107 toward one another. The biasing member sets the clamping force or compression that the drive rolls 107 apply to the welding wires E1, E2. For example, the wire feeder 105 can include biasing springs 125 that apply a bias force to one or more drive rolls 107 to set the compression that the drive rolls apply to the welding wires E1, E2. In the example embodiment of Figure 3, the biasing springs 125 are mounted to an adjusting rod 127 that can be moved inward and outward to adjust the compression of the biasing springs 125. The force of the biasing springs 125 is transferred to the upper drive rolls 107 via pivoting levers 129. As noted above, the vertically-aligned sets of drive rolls 107 have corresponding aligned annular or circumferential grooves through which the welding wires E1, E2 pass simultaneously. That is, the welding wires E1, E2 are located together in the grooves of an upper drive roll and a lower drive roll. The welding wires E1, E2 are squeezed or compressed within the grooves by the bias force applied by the biasing springs 125 to the drive rolls 107. As will be explained further below, the welding wires E1, E2 are made to contact each other within the grooves when squeezed by the drive rolls 107. In addition to an upward/downward compressive force applied to the welding wires E1, E2, a sideways compressive force is also applied to the welding wires E1, E2 to force them together inside of the grooves. The sideways compressive force is provided through the shape of the sidewalls of the grooves.

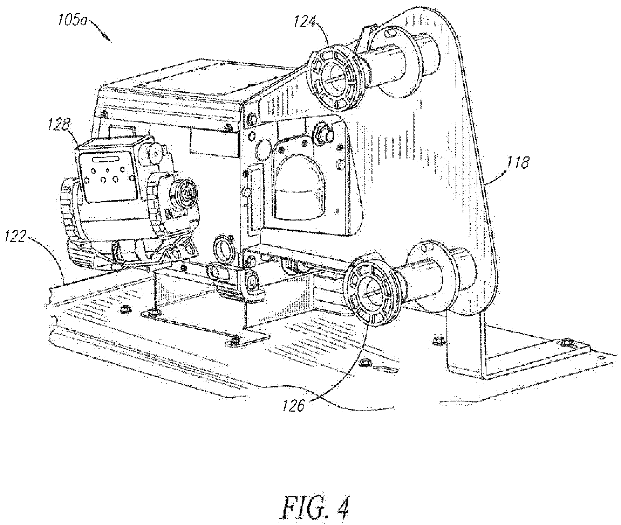

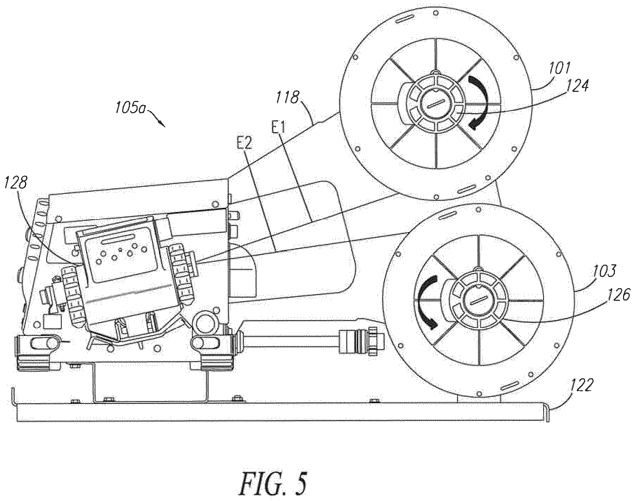

Figures 4 and 5 show a wire feeder 105a having an attached reel stand 118 for multi-wire welding applications. The wire feeder 105a has a common base 122 and the wire feeder and reel stand 118 are attached (e.g., bolted, screwed, etc.) to each other and to the common base. The reel stand 118 has at least two spindles 124, 126 for supporting respective welding wire spools 101, 103 upon which the welding wires E1, E2 are wound. A motor and drive roll assembly 128 (e.g., as discussed above with respect to Fig. 3) can deliver both welding wires E1, E2 simultaneously to the welding torch. The welding wires E1, E2 can have the same diameter and composition or have different diameters and/or compositions as discussed above.

The spindles 124, 126 and wire spools 101, 103 are easily accessible by an operator. The spools 101, 103 can be individually removed and replaced without disturbing the other spool. The ready access provided by the reel stand 118 can allow an operator to quickly change spools with minimal interruption to a deposition operation (e.g., welding, additive manufacturing, etc.)

In Figs. 4 and 5, the spindles 124, 126 project laterally from the reel stand 118 in the same direction and are located on a common lateral side of the reel stand behind the motor and drive roll assembly 128. The upper spindle 124 is located higher on the reel stand 118 than the lower spindle 126, and the upper spool 101 is located above the lower spool 103. When the drive rolls in the motor and drive roll assembly 128 rotate, the welding wires E1, E2 are simultaneously payed out from the spools 101, 103. Depending on how the spools 101, 103 are oriented on the spindles 124, 126, the spindles and spools can rotate in opposite directions or in the same direction. In Fig. 5, the upper spindle 124 and spool 101 will rotate clockwise during payout, and the lower spindle 126 and spool 103 will rotate counterclockwise. Such a configuration will allow both of the welding wires E1, E2 to be fed into the motor and drive roll assembly 128 at a moderate angle with respect to the feeding direction of the motor and drive roll assembly.

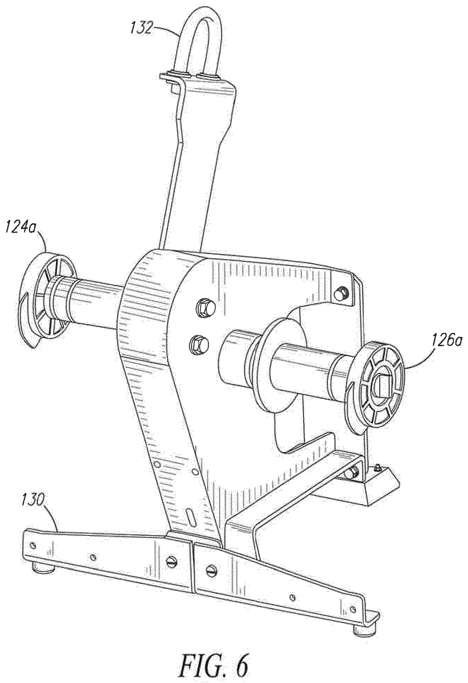

Spindles can also be located on opposite lateral sides of a reel stand, to project in opposite lateral directions. An example of such a reel stand 130 is shown in Fig. 6. The reel stand 130 in Fig. 6 is a free standing reel stand that is not structurally attached to the wire feeder. The spindles 124a, 126a are located on opposite lateral sides of the reel stand 130. In certain embodiments, the reel stand 130 can include a lift bail 132 for suspending the reel stand.

Although the example embodiments shown in the figures depict wire feeders and reel stands for dual wire welding systems, it is to be appreciated that the wire feeders and reel stands could be configured to drive and/or support more than two wire electrodes, such as 3, 4 or more than 4 wire electrodes. Further details regarding the structure of welding wire feeders can be found in U.S. Patent No. 5,816,466 issued on October 6, 1998 and U.S. Patent No. 8,569,653 issued on October 29, 2013.

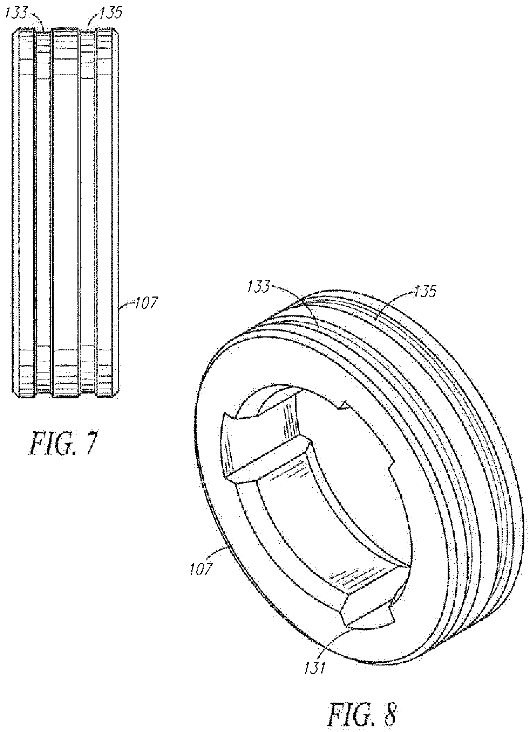

Figures 7 and 8 illustrate an example drive roll 107. The drive roll has a central bore. The inner surface of the bore can include contoured recesses 131 for receiving projections on a driving mechanism, such as a drive gear, to transfer drive torque to the drive roll 107. The drive roll 107 includes one or more annular or circumferential wire receiving grooves 133, 135. The wire receiving grooves 133, 135 are spaced axially along the circumference of the drive roll 107. The wire receiving grooves 133, 135 are designed to receive two welding wires. Example standard welding wire diameters for use with the drive rolls 107 include 0.030 inches, 0.035 inches, 0.040 inches, 0.045 inches, etc. The wire receiving grooves 133, 135 can have the same width and depth as each other, or have different widths and depths to accommodate different sizes or combinations of dual welding wires. If the wire receiving grooves 133, 135 each have the same width and depth, then the drive roll 107 can be reused when one groove is worn out by simply flipping the drive roll over and reinstalling it on the wire feeder. The wire receiving grooves 133, 135 can be configured to simultaneously drive two wires having the same diameter, or two wires having different diameters. In Figure 7, the wire receiving grooves 133, 135 have a trapezoidal shape with straight, angled or inwardly-tapered sidewalls and a central portion that is configured as flat base extending between the sidewalls. However, the wire receiving grooves 133, 135 could have other shapes besides a trapezoidal shape, such as having a curved, concave central portion or groove base for example. In certain embodiments, the grooves 133, 135 can include knurling or other frictional surface treatments to help grip the welding wires.

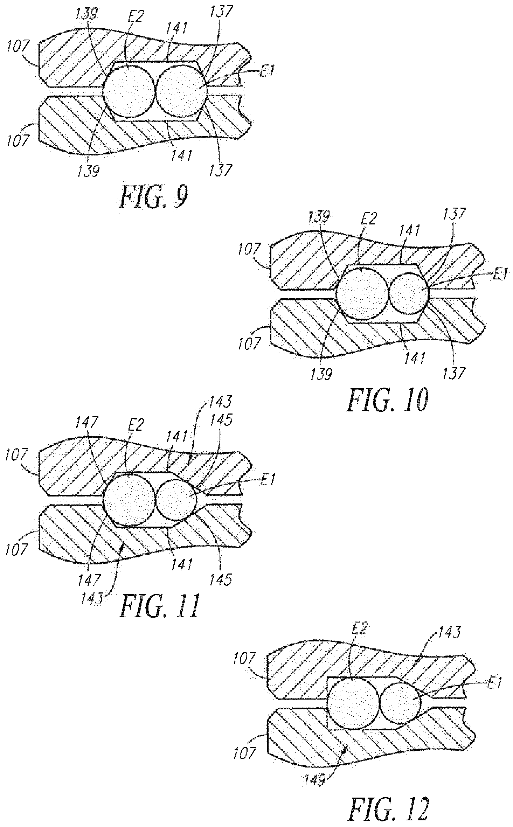

Figures 9 through 14 show partial cross sections of example drive rolls 107 as they would be mounted on a wire feeder for supplying dual welding wires. The drive rolls 107 are biased together to provide a clamping force on the first E1 and the second E2 welding wires. The welding wires E1, E2 are both located in the annular grooves of the upper and lower drive rolls 107. The annular grooves are aligned and can have a trapezoidal shape. In Figure 6, the trapezoidal shape is an isosceles trapezoid formed by an inner sidewall 137, an outer sidewall 139, and a groove base 141 extending between the sidewalls. The isosceles trapezoidal shape is inverted as a cross-sectional recess from the outer circumferential surface of the drive rolls 107.

Due to the bias force applied to the drive rolls 107, the welding wires E1, E2 are clamped in the annular grooves between upper and lower sidewalls 137, 139 forming the grooves and the neighboring welding wire. The welding wires E1, E2 are stably held via three points of contact within the annular grooves. This clamping system can allow both wires to be fed through the wire feeder in a consistent manner. The two welding wires E1, E2 support each other during feeding and pull each other along via friction. Because the inner 137 and outer 139 sidewalls of the annular grooves are angled, they apply both vertical and horizontal clamping forces on the welding wires E1, E2. The horizontal clamping force pushes the welding wires E1, E2 together, causing them to contact each other between the grooves on the upper and lower rolls 107. In certain embodiments, the welding wires E1, E2 are clamped within the annular grooves so as to be radially offset from the central portions of the grooves, e.g., radially offset from the groove bases 141. That is, the welding wires E1, E2 are pinned between each other and the angled sidewalls 137, 139 of the grooves such that gaps exist between the welding wires and the groove bases 141. This can be seen clearly in Figure 9.

The clamping system discussed above allows for some variability (e.g., due to manufacturing tolerances) in the diameters of the welding wires E1, E2. If each welding wire E1, E2 had its own dedicated annular groove in the drive rolls 107, and one of the welding wires was slightly larger than the other, then the smaller welding wire might not be adequately clamped between the drive rolls. In such a situation, the larger welding wire would limit the radial displacement of the drive rolls 107 toward each other, thereby preventing proper clamping of the smaller wire. This could lead to feeding problems and so-called birdnesting of the smaller welding wire during feeding. The clamping system discussed above can accommodate wires of different sizes because the clamping system is self-adjusting. As can be seen in Figure 10, when one welding wire E1 is larger than the other E2, the contact point between the wires is shifted axially from a central position within the annular grooves toward the smaller wire. Three points of contact are maintained on each welding wire E1, E2 by the sidewalls 137, 139 of the groove and the neighboring welding wire.

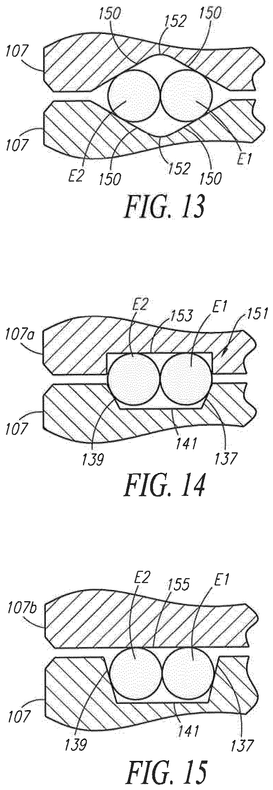

Figure 11 shows drive rolls 107 having annular grooves 143 with cross sections having an acute trapezoid shape instead of an isosceles trapezoid. The inner 145 and outer 147 sidewalls of the grooves have different lengths and form different angles with the outer circumferential surface of the drive rolls. In Figure 12, the drive rolls 107 have annular grooves 149 having a right trapezoid shape. Acute and right trapezoidal grooves can accommodate greater differences in welding wire diameters than isosceles trapezoids. Thus, acute and right trapezoidal grooves can be used when the groove is intended to drive welding wires having different diameters, such as a 0.040 inch welding wire with a 0.045 inch welding wire. In certain embodiments, the sidewalls and/or base of the grooves can be curved (e.g., concave or convex). Also, the inside corner transitions between the sidewalls and the base of the trapezoidal grooves can be curved or radiused. Figure 13 shows example drive rolls having annular grooves with straight, angled sidewalls 150 joined by a concave curved or radiused central portion (e.g., groove base 152). In an example embodiment, the angle between the sidewalls 150 and the outer circumference of the drive roll 107 is about 150°, although other angles are possible and can be determined with sound engineering judgment.

Figure 14 shows an example embodiment in which one drive roll 107 has a trapezoidal groove for the welding wires E1, E2, and the other drive roll 107a has a non-trapezoidal groove. In Figure 14, the non-trapezoidal groove is rectangular in shape, however other shapes are possible. For example, the non-trapezoidal groove could be curved, such as elliptical or rounded in shape. Further, the trapezoidal groove is shown as being located on the lower drive roll 107. However, the trapezoidal groove could be located on the upper drive roll 107a and the non-trapezoidal groove located on the lower drive roll. The welding wires E1, E2 are clamped between respective sidewalls 137, 139 of the trapezoidal groove and the base 153 of the non-trapezoidal groove 151, and the welding wires are forced into contact with each other as discussed above. Thus, the welding wires E1, E2 are stably held via three points of contact within the annular grooves 107, 107a.

Figure 15 shows an example embodiment in which one drive roll 107 has a trapezoidal groove for the welding wires E1, E2, and the other drive roll 107b has no groove, but rather directly contacts the welding wires on its outer circumferential surface 155. The trapezoidal groove is shown as being located on the lower drive roll 107. However, the trapezoidal groove could be located on the upper drive roll. The welding wires E1, E2 are clamped between respective sidewalls 137, 139 of the trapezoidal groove and the outer circumferential surface 155 of the upper drive roll 107b, and the welding wires are forced into contact with each other as discussed above. Thus, the welding wires E1, E2 are stably held via three points of contact.

### Reference numbers

| | | | |
|---|---|---|---|
| 100 | welding system | 129 | levers |
| 101 | electrode source | 130 | reel stand |
| 103 | electrode source | 131 | recess |
| 105 | wire feeder | 132 | lift bail |
| 105a | wire feeder | 133 | groove |
| 107 | drive roll | 135 | groove |
| 107a | drive roll | 137 | sidewall |
| 107b | drive roll | 139 | sidewall |
| 109 | power source | 141 | groove bases |
| 111 | welding torch | 143 | grooves |
| 113 | liner | 145 | sidewall |
| 118 | reel stand | 147 | sidewall |
| 120 | controller | 149 | grooves |
| 121 | output terminals | 150 | sidewalls |
| 123 | drive motor | 151 | groove |
| 124 | spindle | 152 | groove base |
| 124a | spindle | 153 | base |
| 125 | springs | 155 | surface |
| 126 | spindle | | |
| 126a | spindle | E1 | eletrode / welding wire |
| 127 | rod | E2 | electrode / welding wire |
| 128 | roll assembly | W | workpiece |

## Claims

1. A welding or additive manufacturing wire drive system (100), comprising:
a first spindle (124) with a first welding wire spool (101);
a second spindle (126) with a second welding wire spool (103);
a first drive roll (107);
a second drive roll (107), wherein one or both of the first drive roll (107) and
the second drive roll (107) has a circumferential groove (133);
a first and a second welding wire (E1, E2), wherein the first welding wire (E1) is wound on the first welding wire spool (101), and the second welding wire (E2) is wound on the second welding wire spool (103),
the drive system (100) being **characterised in that**:
the first welding wire (E1), from the first welding wire spool (101), is located between the first drive roll (107) and the second drive roll (107) in the circumferential groove (133); and
the second welding wire (E2), from the second welding wire spool (103), is located between the first drive roll (107) and the second drive roll (107) in the circumferential groove (133),
and **in that** the first welding wire (E1) contacts the second welding wire (E2) between the first drive roll (107) and the second drive roll (107), and the first welding wire (E1) further contacts a first sidewall portion (137) of the circumferential groove (133), and the second welding wire (E2) further contacts a second sidewall portion (139) of the circumferential groove (133), and
both of the first welding wire (E1) and the second welding wire (E2) are radially offset from a central portion of the circumferential groove (133); and
**in that** the circumferential groove (133) has a trapezoidal shape.

2. The welding or additive manufacturing wire drive system of claim 1, wherein the first spindle (124) and the second spindle (126) are located on opposite lateral sides of a reel stand (118), or on a common lateral side of a reel stand (118).

3. The welding or additive manufacturing wire drive system of claim 2, wherein:
the first welding wire spool (101) is located above the second welding wire spool (103) on the reel stand (118),
the first drive roll (107) and the second drive roll (107) rotate to simultaneously payout the first welding wire (E1) from the first welding wire spool (101) and payout the second welding wire (E2) from the second welding wire spool (103), and
the first welding wire spool (101) and the second welding wire spool (103) rotate in opposite directions during payout.

4. The welding or additive manufacturing wire drive system according to one of the claims 1 to 2 wherein:
the first drive roll (107) having a first circumferential groove (133) comprising a first inner sidewall (137), a first outer sidewall (139), and a first concave groove base (141) extending between the first inner sidewall (137) and the first outer sidewall (139);
the second drive roll (107) having a second circumferential groove (133) comprising a second inner sidewall (137), a second outer sidewall (139), and a second concave groove base (141) extending between the second inner sidewall (137) and the second outer sidewall (139), wherein the second circumferential groove (133) is aligned with the first circumferential groove (133);
the first welding wire (E1), from the first welding wire spool (101), is located between the first drive roll (107) and the second drive roll (107) in both of the first circumferential groove (133) and the second circumferential groove (133);
the second welding wire (E2), from the second welding wire spool (103), is located between the first drive roll (107) and the second drive roll (107) in both of the first circumferential groove (133) and the second circumferential groove (133); and
a biasing member that biases the first drive roll (107) toward the second drive roll (107) to force the first welding wire (E1) to contact the second welding wire (E2), wherein:
the first welding wire (E1) contacts each of the first inner sidewall (E2), the second inner sidewall (137), and the second welding wire (E2),
the second welding wire (E2) contacts each of the first outer sidewall (139), the second outer sidewall (139), and the first welding wire (E1), and
the first welding wire (E1) and the second welding wire (E2) are offset from both of the first concave groove base (141) and the second concave groove base (141).

5. The welding or additive manufacturing wire drive system of claim 4, wherein:
one of the first welding wire spool (101) and the second welding wire spool (103) is located above the other one of the first welding wire spool (101) and the second welding wire spool (103) on the reel stand (108),
the first drive roll (107) and the second drive roll (107) rotate to simultaneously payout the first welding wire (E1) from the first welding wire spool (101) and payout the second welding wire (E2) from the second welding wire spool (103), and
the first welding wire spool (101) and the second welding wire spool (103) rotate in opposite directions during payout.

6. The welding or additive manufacturing wire drive system of claim 5, wherein
the first welding wire (E1) is clamped by the first inner sidewall (137), the second inner sidewall (137), and the second welding wire (E2) so as to be clamped offset from both of the first concave groove base (141) and the second concave groove base (141), and
the second welding wire (E2) is clamped by the first outer sidewall (139), the second outer sidewall (139), and the first welding wire (E1) so as to be clamped offset from both of the first concave groove (141) base and the second concave groove base (141).

7. The welding or additive manufacturing wire drive system according to one of the claims 1 to 2, wherein:
a reel stand (108) comprises the first spindle (124) for the first welding wire spool (101), and the second spindle (126) for the second welding wire spool (103), wherein the first welding wire spool (101) is located above the second welding wire spool on the reel stand (108);
the first drive roll (107) having a first circumferential groove (133);
the second drive roll (107) having a second circumferential groove (133) aligned with the first circumferential groove (133);
the first welding wire (E1), from the first welding wire spool (101), located between the first drive roll (107) and the second drive roll (107) in both of the first circumferential groove (133) and the second circumferential groove (133);
the second welding wire (E2), from the second welding wire spool (103), located between the first drive roll (107) and the second drive roll (107) in both of the first circumferential groove (133) and the second circumferential groove (133); and
a biasing member that biases the first drive roll (107) toward the second drive roll (107) to clamp the first welding wire (E1) and the second welding wire (E2) between the first drive roll (107) and the second drive roll (107),
wherein the first drive roll (107) and the second drive roll (107) rotate to simultaneously payout the first welding wire (E1) from the first welding wire spool (101) and payout the second welding wire (E2) from the second welding wire spool (103), and wherein the first welding wire spool (101) and the second welding wire spool (103) rotate in opposite directions during payout.

8. The welding or additive manufacturing wire drive system of claim 7, wherein the first welding wire (E1) contacts respective first sidewall portions (137) of the first and second circumferential grooves (133), the second welding wire (E2) contacts respective second sidewall portions (137) of the first and second circumferential grooves (137), and the first welding wire (E1) contacts the second welding wire (E2) between the first and second circumferential grooves (137).

9. The welding or additive manufacturing wire drive system of claim 8, wherein
the first welding wire (E1) is clamped by the respective first sidewall portions (137) of the first and second circumferential grooves (137) and the second welding wire (E2), so as to be clamped radially offset from the respective central portions of the first circumferential groove (137) and the second circumferential groove (137), and
the second welding wire (E2) is clamped by the respective second sidewall portions (139) of the first and second circumferential grooves (137) and the first welding wire (E1), so as to be clamped radially offset from the respective central portions of the first circumferential groove (137) and the second circumferential groove (137).

10. The welding or additive manufacturing wire drive system of one of the claims 1 to 9, wherein the first welding wire (E1) and the second welding wire (E2) have different diameters.

## Patentansprüche

1. Ein Drahtvorschubsystem (100) für das Schweißen oder die additive Fertigung, umfassend:
eine erste Spindel (124) mit einer ersten Schweißdrahtspule (101);
eine zweite Spindel (126) mit einer zweiten Schweißdrahtspule (103);
eine erste Antriebsrolle (107);
eine zweite Antriebsrolle (107), wobei eine oder beide der ersten Antriebsrolle (107) und der zweiten Antriebsrolle (107) eine Umfangsrille (133) aufweisen; einen ersten und einen zweiten Schweißdraht (E1, E2), wobei der erste Schweißdraht (E1) auf die erste Schweißdrahtspule (101) gewickelt ist und der zweite Schweißdraht (E2) auf die zweite Schweißdrahtspule (103) gewickelt ist,
wobei das Antriebssystem (100) **dadurch gekennzeichnet ist, dass**:
der erste Schweißdraht (E1) von der ersten Schweißdrahtspule (101) zwischen der ersten Antriebsrolle (107) und der zweiten Antriebsrolle (107) in der Umfangsrille (133) angeordnet ist; und
der zweite Schweißdraht (E2) von der zweiten Schweißdrahtspule (103) zwischen der ersten Antriebsrolle (107) und der zweiten Antriebsrolle (107) in der Umfangsrille (133) angeordnet ist, und dadurch, dass
der erste Schweißdraht (E1) den zweiten Schweißdraht (E2) zwischen der ersten Antriebsrolle (107) und der zweiten Antriebsrolle (107) berührt, und der erste Schweißdraht (E1) ferner einen ersten Seitenwandabschnitt (137) der Umfangsrille (133) berührt und der zweite Schweißdraht (E2) ferner einen zweiten Seitenwandabschnitt (139) der Umfangsrille (133) berührt, und
sowohl der erste Schweißdraht (E1) als auch der zweite Schweißdraht (E2) radial von einem Mittelabschnitt der Umfangsrille (133) versetzt sind;
und dass die Umfangsrille (133) eine trapezförmige Form aufweist.

2. Drahtvorschubsystem für das Schweißen oder die additive Fertigung nach Anspruch 1, wobei die erste Spindel (124) und die zweite Spindel (126) auf gegenüberliegenden Seiten eines Rollenständers (118) oder auf einer gemeinsamen Seite eines Rollenständers (118) angeordnet sind.

3. Drahtvorschubsystem für das Schweißen oder die additive Fertigung nach Anspruch 2, wobei die erste Schweißdrahtspule (101) über der zweiten Schweißdrahtspule (103) auf dem Rollenständer (118) angeordnet ist,
die erste Antriebsrolle (107) und die zweite Antriebsrolle (107) sich drehen, um gleichzeitig den ersten Schweißdraht (E1) von der ersten Schweißdrahtspule (101) und den zweiten Schweißdraht (E2) von der zweiten Schweißdrahtspule (103) abzuwickeln, und
die erste Schweißdrahtspule (101) und die zweite Schweißdrahtspule (103) sich während des Abwickelns in entgegengesetzte Richtungen drehen.

4. Drahtvorschubsystem für das Schweißen oder die additive Fertigung nach einem der Ansprüche 1 bis 2, wobei:
die erste Antriebsrolle (107) eine erste Umfangsrille (133) aufweist, die eine erste Innenseitenwand (137), eine erste Außenseitenwand (139) und einen ersten konkaven Rillenboden (141) umfasst, der sich zwischen der ersten Innenseitenwand (137) und der ersten Außenseitenwand (139) erstreckt;
die zweite Antriebsrolle (107) eine zweite Umfangsrille (133) aufweist, die eine zweite Innenseitenwand (137), eine zweite Außenseitenwand (139) und einen zweiten konkaven Rillenboden (141) umfasst, der sich zwischen der zweiten Innenseitenwand (137) und der zweiten Außenseitenwand (139) erstreckt, wobei die zweite Umfangsrille (133) mit der ersten Umfangsrille (133) fluchtet;
der erste Schweißdraht (E1) von der ersten Schweißdrahtspule (101) zwischen der ersten Antriebsrolle (107) und der zweiten Antriebsrolle (107) sowohl in der ersten Umfangsrille (133) als auch in der zweiten Umfangsrille (133) angeordnet ist;
der zweite Schweißdraht (E2) von der zweiten Schweißdrahtspule (103) zwischen der ersten Antriebsrolle (107) und der zweiten Antriebsrolle (107) sowohl in der ersten Umfangsrille (133) als auch in der zweiten Umfangsrille (133) angeordnet ist; und
ein Vorspannelement, das die erste Antriebsrolle (107) in Richtung der zweiten Antriebsrolle (107) vorspannt, um den ersten Schweißdraht (E1) in Berührung mit dem zweiten Schweißdraht (E2) zu zwingen, wobei:
der erste Schweißdraht (E1) jeweils die erste Innenwand (E2), die zweite Innenwand (137) und den zweiten Schweißdraht (E2) berührt, der zweite Schweißdraht (E2) jeweils die erste Außenwand (139), die zweite Außenwand (139) und den ersten Schweißdraht (E1) berührt, und der erste Schweißdraht (E1) und der zweite Schweißdraht (E2) sowohl von dem ersten konkaven Rillenboden (141) als auch von dem zweiten konkaven Rillenboden (141) versetzt sind.

5. Drahtvorschubsystem für das Schweißen oder die additive Fertigung nach Anspruch 4, wobei:
eine der ersten Schweißdrahtspulen (101) und der zweiten Schweißdrahtspule (103) über der anderen der ersten Schweißdrahtspule (101) und der zweiten Schweißdrahtspule (103) auf dem Rollenständer (108) angeordnet ist, sich die erste Antriebsrolle (107) und die zweite Antriebsrolle (107) drehen, um gleichzeitig den ersten Schweißdraht (E1) von der ersten Schweißdrahtspule (101) und den zweiten Schweißdraht (E2) von der zweiten Schweißdrahtspule (103) abzuwickeln, und
die erste Schweißdrahtspule (101) und die zweite Schweißdrahtspule (103) sich während des Abwickelns in entgegengesetzte Richtungen drehen.

6. Drahtvorschubsystem für das Schweißen oder die additive Fertigung nach Anspruch 5, wobei:
der erste Schweißdraht (E1) durch die erste Innenwand (137), die zweite Innenwand (137) und den zweiten Schweißdraht (E2) so geklemmt wird, dass er sowohl von dem ersten konkaven Rillenboden (141) als auch von dem zweiten konkaven Rillenboden (141) versetzt geklemmt ist, und
der zweite Schweißdraht (E2) durch die erste äußere Seitenwand (139), die zweite äußere Seitenwand (139) und den ersten Schweißdraht (E1) so geklemmt wird, dass er sowohl von dem ersten konkaven Rillenboden (141) als auch von dem zweiten konkaven Rillenboden (141) versetzt geklemmt ist.

7. Drahtvorschubsystem für das Schweißen oder die additive Fertigung nach einem der Ansprüche 1 bis 2, wobei:
ein Rollenständer (108) die erste Spindel (124) für die erste Schweißdrahtspule (101) und die zweite Spindel (126) für die zweite Schweißdrahtspule (103) umfasst, wobei die erste Schweißdrahtspule (101) über der zweiten Schweißdrahtspule auf dem Rollenständer (108) angeordnet ist;
die erste Antriebsrolle (107) eine erste Umfangsrille (133) aufweist;
die zweite Antriebsrolle (107) eine zweite Umfangsrille (133) aufweist, die mit der ersten Umfangsrille (133) ausgerichtet ist;
der erste Schweißdraht (E1) von der ersten Schweißdrahtspule (101) zwischen der ersten Antriebsrolle (107) und der zweiten Antriebsrolle (107) sowohl in der ersten Umfangsrille (133) als auch in der zweiten Umfangsrille (133) angeordnet ist;
der zweite Schweißdraht (E2) von der zweiten Schweißdrahtspule (103) zwischen der ersten Antriebsrolle (107) und der zweiten Antriebsrolle (107) sowohl in der ersten Umfangsrille (133) als auch in der zweiten Umfangsrille (133) angeordnet ist; und
ein Vorspannelement, das die erste Antriebsrolle (107) in Richtung der zweiten Antriebsrolle (107) vorspannt, um den ersten Schweißdraht (E1) und den zweiten Schweißdraht (E2) zwischen der ersten Antriebsrolle (107) und der zweiten Antriebsrolle (107) zu klemmen, wobei die erste Antriebsrolle (107) und die zweite Antriebsrolle (107) sich drehen, um gleichzeitig den ersten Schweißdraht (E1) von der ersten Schweißdrahtspule (101) abzuwickeln und den zweiten Schweißdraht (E2) von der zweiten Schweißdrahtspule (103) abzuwickeln, und wobei sich die erste Schweißdrahtspule (101) und die zweite Schweißdrahtspule (103) während des Abwickelns in entgegengesetzte Richtungen drehen.

8. Drahtvorschubsystem für das Schweißen oder die additive Fertigung nach Anspruch 7,
wobei der erste Schweißdraht (E1) jeweilige erste Seitenwandabschnitte (137) der ersten und zweiten Umfangsrille (133) berührt, der zweite Schweißdraht (E2) entsprechende zweiten Seitenwandabschnitte (137) der ersten und zweiten Umfangsnut (137) berührt und der erste Schweißdraht (E1) den zweiten Schweißdraht (E2) zwischen der ersten und zweiten Umfangsrille (137) berührt.

9. Drahtvorschubsystem für das Schweißen oder die additive Fertigung nach Anspruch 8, wobei der erste Schweißdraht (E1) durch die jeweiligen ersten Seitenwandabschnitte (137) der ersten und zweiten Umfangsrillen (137) und den zweiten Schweißdraht (E2) geklemmt ist, so dass er radial versetzt zu den jeweiligen Mittelabschnitten der ersten Umfangsrille (137) und der zweiten Umfangsrille (137) geklemmt ist, und
der zweite Schweißdraht (E2) durch die jeweiligen zweiten Seitenwandabschnitte (139) der ersten und zweiten Umfangsrille (137) und den ersten Schweißdraht (E1) so geklemmt ist, dass er radial versetzt zu den jeweiligen Mittelabschnitten der ersten Umfangsrille (137) und der zweiten Umfangsrille (137) geklemmt ist.

10. Drahtvorschubsystem für das Schweißen oder die additive Fertigung nach einem der Ansprüche 1 bis 9, wobei der erste Schweißdraht (E1) und der zweite Schweißdraht (E2) unterschiedliche Durchmesser aufweisen.

## Revendications

1. Système d'entraînement de fil pour le soudage ou la fabrication additive (100), comprenant :
une première broche (124) munie d'une première bobine de fil de soudage (101) ;
une seconde broche (126) munie d'une seconde bobine de fil de soudage (103) ;
un premier dévidoir (107) ;
un second dévidoir (107), **caractérisé en ce que** le premier dévidoir (107) et/ou le second dévidoir (107) présentent une rainure circonférentielle (133) ;
un premier et un second fil de soudage (E1, E2), **caractérisé en ce que** le premier fil de soudage (E1) est enroulé sur la première bobine de fil de soudage (101), et le second fil de soudage (E2) est enroulé sur la seconde bobine de fil de soudage (103),
le système d'entraînement (100) étant **caractérisé en ce que** :
le premier fil de soudage (E1), de la première bobine de fil de soudage (101), est situé entre le premier dévidoir (107) et le second dévidoir (107) dans la rainure circonférentielle (133) ; et
le second fil de soudage (E2), de la seconde bobine de fil de soudage (103), est situé entre le premier dévidoir (107) et le second dévidoir (107) dans la rainure circonférentielle (133),
et **en ce que** :
le premier fil de soudage (E1) entre en contact avec le second fil de soudage (E2) entre le premier dévidoir (107) et le second dévidoir (107), et le premier fil de soudage (E1) entre également en contact avec une première partie de paroi latérale (137) de la rainure circonférentielle (133), et le second fil de soudage (E2) entre également en contact avec une second partie de paroi latérale (139) de la rainure circonférentielle (133), et le premier fil de soudage (E1) et le second fil de soudage (E2) sont tous deux décalés radialement par rapport à une partie centrale de la rainure circonférentielle (133) ;
et **en ce que** la rainure circonférentielle (133) a une forme trapézoïdale.

2. Système d'entraînement de fil pour le soudage ou la fabrication additive selon la revendication 1, **caractérisé en ce que** la première broche (124) et la seconde broche (126) sont situées sur les côtés latéraux opposés d'un porte-bobines (118), ou sur un côté latéral commun d'un porte-bobines (118).

3. Système d'entraînement de fil pour le soudage ou la fabrication additive selon la revendication 2, **caractérisé en ce que** :
la première bobine de fil de soudage (101) est située au-dessus de la seconde bobine de fil de soudage (103) sur le porte-bobines (118),
le premier dévidoir (107) et le second dévidoir (107) tournent pour dévider simultanément le premier fil de soudage (E1) de la première bobine de fil de soudage (101) et dévider le deuxième fil de soudage (E2) de la seconde bobine de fil de soudage (103), et la première bobine de fil de soudage (101) et la seconde bobine de fil de soudage (103) tournent en sens inverse pendant le dévidage.

4. Système d'entraînement de fil pour le soudage ou la fabrication additive selon l'une quelconque des revendications 1 à 2 **caractérisé en ce que** :
le premier dévidoir (107) présentant une première rainure circonférentielle (133) comprend une première paroi latérale intérieure (137), une première paroi latérale extérieure (139), et un premier fond de rainure concave (141) s'étendant entre la première paroi latérale intérieure (137) et la première paroi latérale extérieure (139) ;
le second dévidoir (107) présentant une seconde rainure circonférentielle (133) comprend une seconde paroi latérale intérieure (137), une seconde paroi latérale extérieure (139), et un second fond de rainure concave (141) s'étendant entre la seconde paroi latérale intérieure (137) et la seconde paroi latérale extérieure (139), **caractérisé en ce que** la seconde rainure circonférentielle (133) est alignée avec la première rainure circonférentielle (133) ;
le premier fil de soudage (E1), de la première bobine de fil de soudage (101), est situé entre le premier dévidoir (107) et le second dévidoir (107) dans la première rainure circonférentielle (133) et la seconde rainure circonférentielle (133) ;
le second fil de soudage (E2), de la seconde bobine de fil de soudage (103), est situé entre le premier dévidoir (107) et le second dévidoir (107) dans la première rainure circonférentielle (133) et la seconde rainure circonférentielle (133) ; et
un élément de sollicitation sollicite le premier dévidoir (107) en direction du second dévidoir (107) pour forcer le premier fil de soudage (E1) à entrer en contact avec le deuxième fil de soudage (E2), **caractérisé en ce que** :
le premier fil de soudage (E1) entre en contact avec la première paroi latérale intérieure (E2) et la deuxième paroi latérale intérieure (137), ainsi qu'avec le second fil de soudage (E2),
le second fil de soudage (E2) entre en contact avec la première paroi latérale extérieure (139) et la seconde paroi latérale extérieure (139), ainsi qu'avec le premier fil de soudage (E1), et
le premier fil de soudage (E1) et le second fil de soudage (E2) sont décalés par rapport au premier fond de rainure concave (141) et au second fond de rainure concave (141).

5. Système d'entraînement de fil pour le soudage ou la fabrication additive selon la revendication 4, **caractérisé en ce que** :
la première bobine de fil de soudage (101) ou la seconde bobine de fil de soudage (103) est située au-dessus de l'autre première bobine de fil de soudage (101) ou seconde bobine de fil de soudage (103) sur le porte-bobines (108),
le premier dévidoir (107) et le second dévidoir (107) tournent pour dévider simultanément le premier fil de soudage (E1) de la première bobine de fil de soudage (101) et dévider le second fil de soudage (E2) de la deuxième bobine de fil de soudage (103), et
la première bobine de fil de soudage (101) et la seconde bobine de fil de soudage (103) tournent en sens inverse pendant le dévidage.

6. Système d'entraînement de fil pour le soudage ou la fabrication additive selon la revendication 5, **caractérisé en ce que** :
le premier fil de soudage (E1) est serré par la première paroi latérale intérieure (137), la seconde paroi latérale intérieure (137), et le second fil de soudage (E2) de sorte qu'il soit serré en position décalée par rapport au premier fond de rainure concave (141) et au second fond de rainure concave (141), et
le second fil de soudage (E2) est serré par la première paroi latérale extérieure (139), la seconde paroi latérale extérieure (139), et le premier fil de soudage (E1) de sorte qu'il soit serré en position décalée par rapport au premier fond de rainure concave (141) et au second fond de rainure concave (141).

7. Système d'entraînement de fil pour le soudage ou la fabrication additive selon l'une quelconque des revendications 1 à 2, **caractérisé en ce que** :
un porte-bobines (108) comprend la première broche (124) pour la première bobine de fil de soudage (101), et la seconde broche (126) pour la seconde bobine de fil de soudage (103), **caractérisé en ce que** la première bobine de fil de soudage (101) est située au-dessus de la seconde bobine de fil de soudage sur le porte-bobines (108) ;
le premier dévidoir (107) présente une première rainure circonférentielle (133) ;
le second dévidoir (107) présente une second rainure circonférentielle (133) alignée avec la première rainure circonférentielle (133) ;
le premier fil de soudage (E1), de la première bobine de fil de soudage (101), est situé entre le premier dévidoir (107) et le second dévidoir (107) dans la première rainure circonférentielle (133) et la seconde rainure circonférentielle (133) ;
le second fil de soudage (E2), de la seconde bobine de fil de soudage (103), est situé entre le premier dévidoir (107) et le second dévidoir (107) dans la première rainure circonférentielle (133) et la seconde rainure circonférentielle (133) ; et
un élément de sollicitation sollicite le premier dévidoir (107) en direction du second dévidoir (107) pour serrer le premier fil de soudage (E1) et le second fil de soudage (E2) entre le premier dévidoir (107) et le second dévidoir (107), **caractérisé en ce que** le premier dévidoir (107) et le second dévidoir (107) tournent pour dévider simultanément le premier fil de soudage (E1) de la première bobine de fil de soudage (101) et dévider le second fil de soudage (E2) de la seconde bobine de fil de soudage (103), et **caractérisé en ce que** la première bobine de fil de soudage (101) et la seconde bobine de fil de soudage (103) tournent en sens inverse pendant le dévidage.

8. Système d'entraînement de fil pour le soudage ou la fabrication additive selon la revendication 7, **caractérisé en ce que** le premier fil de soudage (E1) entre en contact avec les premières parties de paroi latérale (137) respectives des première et seconde rainures circonférentielles (133), le second fil de soudage (E2) entre en contact avec les secondes parties de paroi latérale (137) respectives des première et seconde rainures circonférentielles (137), et le premier fil de soudage (E1) entre en contact avec le second fil de soudage (E2) entre les première et seconde rainures circonférentielles (137).

9. Système d'entraînement de fil pour le soudage ou la fabrication additive selon la revendication 8, **caractérisé en ce que** le premier fil de soudage (E1) est serré par les premières parties de paroi latérale (137) respectives des première et seconde rainures circonférentielles (137) et le second fil de soudage (E2), de sorte qu'il soit serré en position radialement décalée par rapport aux parties centrales respectives de la première rainure circonférentielle (137) et de la seconde rainure circonférentielle (137), et le second fil de soudage (E2) est serré par les secondes parties de paroi latérale (139) respectives des première et seconde rainures circonférentielles (137) et le premier fil de soudage (E1), de sorte qu'il soit serré en position radialement décalée par rapport aux parties centrales respectives de la première rainure circonférentielle (137) et de la seconde rainure circonférentielle (137).

10. Système d'entraînement de fil pour le soudage ou la fabrication additive selon l'une quelconque des revendications 1 à 9, **caractérisé en ce que** le premier fil de soudage (E1) et le second fil de soudage (E2) ont des diamètres différents.
